# EUROPEAN PATENT APPLICATION

(11) **EP 4 550 044 A1**
(43) Date of publication of application: **07.05.2025**
(21) Application number: 23839842.4
(22) Date of filing: 28.06.2023
(51) Int. Cl.: G03B 5/04, G03B 17/12, G03B 3/10, G03B 13/36, H04N 23/54, H04N 23/55, G02B 7/08, G02B 7/04, G02B 27/64

(54) **CAMERA MODULE COMPRISING IMAGE STABILIZATION UNIT, AND ELECTRONIC DEVICE COMPRISING SAME**

(30) Priority: 14.07.2022 KR 20220087130; 26.10.2022 KR 20220139197
(71) Applicant: Samsung Electronics Co., Ltd., Suwon-si, Gyeonggi-do 16677 (KR)
(72) Inventor: BYON, Kwangseok, Suwon-si Gyeonggi-do 16677 (KR); KIM, Bongchan, Suwon-si Gyeonggi-do 16677 (KR); PARK, Jaeheung, Suwon-si Gyeonggi-do 16677 (KR); PARK, Jaehyoung, Suwon-si Gyeonggi-do 16677 (KR)
(74) Representative: HGF
(86) International application number: PCT/KR2023/009059
(87) International publication number: WO 2024/014748

(57) **Abstract**

An electronic device according to one embodiment comprises at least one camera module. The camera module comprises a lens housing including, along an optical axis, an image stabilization unit, an autofocus drive unit, a lens system and an image sensor. The image stabilization unit comprises: an optical member for reflecting incident light and emitting the reflected image light at the image sensor; an optical member holder in which the optical member is disposed, and which is arranged to be rotatable around a pitching axis and a yawing axis; a pitching drive unit disposed within the lens housing so as to provide a force for rotating the optical member holder around the pitching axis; a yawing drive unit disposed within the lens housing so as to provide a force for rotating the optical member holder around the yawing axis; and a centering unit disposed between the lens housing and the optical member holder so as to provide a centering force of the optical member holder. The centering unit includes: a centering magnetic which is disposed on the optical member holder and includes a first surface facing a first direction and a second surface facing the direction opposite to the first direction, the second surface being formed in a curved shape; and a centering yoke which is disposed in the lens housing, is arranged to face the second surface while spaced apart from the second surface, and is parallel to the first surface. In addition, various embodiments identified through the specification are possible.

## Description

### [Technical Field]

The disclosure relates to a structure of an image stabilization unit of a camera module disposed in an electronic device.

### [Background Art]

An electronic device may have at least one camera module disposed on a front surface or a rear surface thereof. The at least one camera module may have a two or more times high-magnification zoom camera function. When the camera module of the high-magnification zoom camera function is disposed in a housing of an electronic device, it may protrude from the outer surface of the housing due to a long focal distance of an optical system.

The camera module of the high-magnification zoom function bends an optical axis once by using an optical member to form a right angle between the optical axis of a lens and the angle of view for photographing and the camera module may be mounted within the housing of the electronic device.

The camera module of the high-magnification zoom function described above may include an image stabilization unit. The image stabilization unit may correct by shifting a lens system or moving a prism with reference to an axis.

### [Disclosure of Invention]

### [Technical Problem]

However, the camera module which bends the optical axis by using the optical member such as a prism may adopt a method of rotating a prism holder as an image stabilization method, and hence it may be difficult to ensure stability of the prism holder and high current consumption may occur.

In particular, the camera module of this type may have a rotating torque generated in the prism holder even when power is turned off, and hence, there may be a factor that makes centering of the prism holder unstable or causes high current consumption to occur. For example, when the center of mass of a moving part of the camera module moves away from a rotation axis, a rotation torque may be generated due to the gravity, and a larger driving force may be required which may further increase current consumption.

In addition, when power is turned off, the optical member such as the prism may be disposed to be biased toward one side of the prism holder, and may collide with a stopper even in response to shaking or a small impact and may become structurally vulnerable.

### [Solution to Problem]

An embodiment of the disclosure provides a camera module including an image stabilization unit to reduce current consumption and an electronic device including the same.

In an embodiment of the disclosure, there is provided a camera module which may reduce centering current consumption due to a centering unit which provides a return force caused by an asymmetric centering magnet and/or an asymmetric centering yoke, and an electronic device including the same.

In an embodiment of the disclosure, there is provided a camera module including an image stabilization unit which has a mass balancer disposed in an optimal member holder to achieve stability and to reduce current consumption, and an electronic device including the same.

According to an embodiment of the disclosure, an electronic device includes at least one camera module, wherein the camera module includes a lens housing which comprises, along an optical axis, an image stabilization unit, an auto-focusing drive unit, a lens system and an image sensor, wherein the image stabilization unit includes: an optical member configured to reflect incident light and to output the reflected image light to the image sensor; an optical member holder which has the optical member disposed therein and is disposed to be rotatable with reference to a pitching axis and a yawing axis; a pitching drive unit which is disposed in the lens housing to provide a force to allow the optical member holder to rotate with reference to the pitching axis; a yawing drive unit which is disposed in the lens housing to provide a force to allow the optical member holder to rotate with reference to the yawing axis; and a centering unit which is disposed between the lens housing and the optical member holder to provide a centering force of the optical member holder, wherein the centering unit includes: a centering magnet which is disposed in the optical member holder and comprises a first surface facing a first direction and a second surface facing the opposite direction of the first direction, the second surface being formed in a curved shape; and a centering yoke which is disposed in the lens housing and disposed to face the second surface, spaced apart from the second surface, the centering yoke being parallel to the first surface.

### [Advantageous Effects of Invention]

According to an embodiment of the disclosure, a camera module has a centering magnet and/or a centering yoke formed in an asymmetric structure, so that an image stabilization unit of the camera module may be stable and current consumption may be reduced.

According to an embodiment of the disclosure, a camera module has a mass balancer disposed in an optical member holder, so that an image stabilization unit may be stable even when power is turned off, and current consumption may be reduced.

### [Brief Description of Drawings]

FIG. 1 is a perspective view illustrating a front surface of an electronic device according to an embodiment of the disclosure;
FIG. 2 is a perspective view illustrating a rear surface of the electronic device according to an embodiment of the disclosure;
FIG. 3 is an exploded perspective view illustrating main inner parts of an electronic device according to an embodiment of the disclosure;
FIG. 4 is a perspective view illustrating an exterior of a camera module according to an embodiment of the disclosure;
FIG. 5 is an exploded perspective view illustrating an inner structure of the camera module according to an embodiment of the disclosure;
FIG. 6A is a cross-sectional view illustrating the camera module which is cut alonga transverse direction according to an embodiment of the disclosure;
FIG. 6B is a perspective view illustrating a lens drive unit of the camera module according to an embodiment of the disclosure;
FIG. 7 is a perspective view illustrating an optical member holder according to an embodiment of the disclosure;
FIG. 8 is an exploded perspective view illustrating the optical member holder according to an embodiment of the disclosure;
FIG. 9 is a perspective view illustrating a centering unit of an image stabilization unit according to an embodiment of the disclosure;
FIGS. 10 to 12 are perspective views illustrating the optical member holder according to an embodiment of the disclosure;
FIG. 13 is a perspective view illustrating a centering unit of an image stabilization unit according to an embodiment of the disclosure;
FIG. 14 is a view schematically illustrating arrangement of the centering unit according to an embodiment of the disclosure;
FIG. 15 is a graph illustrating comparison when a centering yoke is a plane yoke and when the centering yoke is a round yoke, as a graph illustrating changes by a magnetic centering force without considering an error of a mass center and a rotation center of a moving part of a camera module according to an embodiment of the disclosure;
FIG. 16 is a perspective view illustrating a mass balancer which is disposed on an optical member holder according to an embodiment of the disclosure;
FIG. 17 is a view illustrating one side of FIG. 16;
FIG. 18 is a graph illustrating changes in the return torque when the mass center of the optical member holder is considered according to an embodiment of the disclosure;
FIG. 19 is a perspective view illustrating a centering unit of an image stabilization unit according to an embodiment of the disclosure;
FIG. 20 is a perspective view illustrating a centering unit of an image stabilization unit according to an embodiment of the disclosure;
FIG. 21 is a view schematically illustrating arrangement of a centering unit according to an embodiment of the disclosure; and
FIG. 22 is a view illustrating a centering unit of an image stabilization unit according to an embodiment of the disclosure.

Regarding explanation of the drawings, the same or like reference numerals may be used to refer to the same or like components.

### [Best Mode for Carrying out the Invention]

Hereinafter, various embodiments of the disclosure will be described with reference to the accompanying drawings. It should be appreciated that various embodiments are not intended to limit the disclosure to particular embodiments and include various modifications, equivalents, and/or alternatives of embodiments of the disclosure.

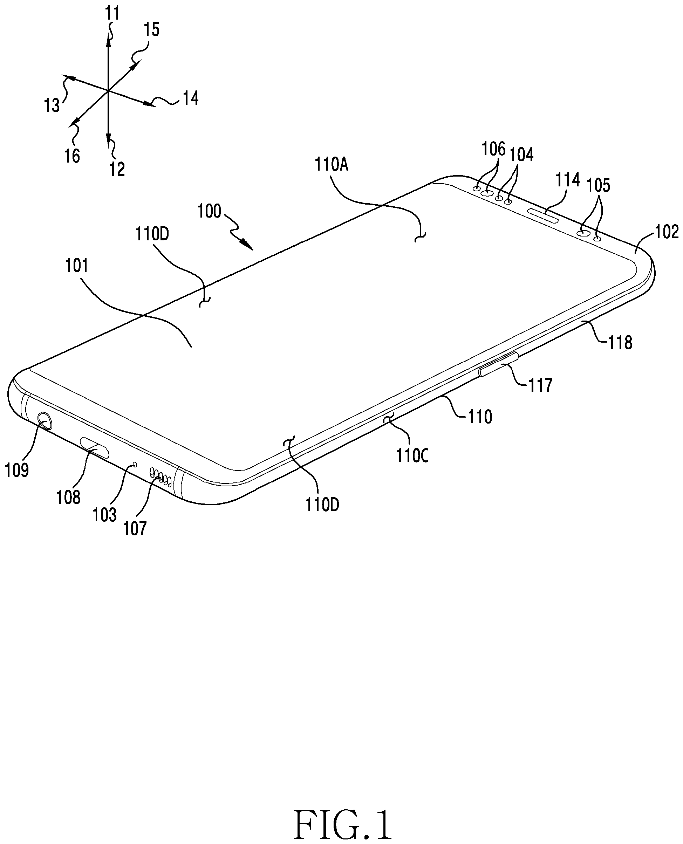

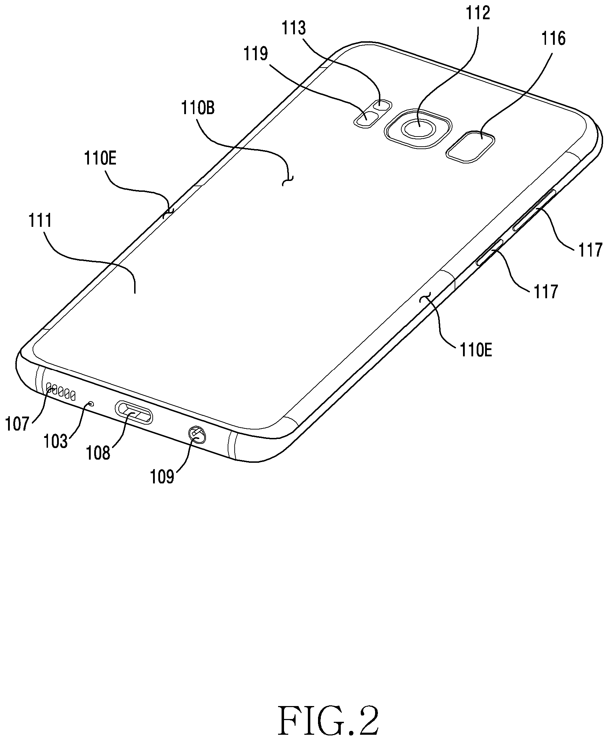

FIG. 1 is a perspective view illustrating a front surface of an electronic device according to an embodiment. FIG. 2 is a perspective view illustrating a rear surface of the electronic device of FIG. 1.

Referring to FIGS. 1 and 2, the electronic device 100 according to an embodiment may include a housing 110 which includes a first surface (or a front surface) 110A, a second surface (or a rear surface) 110B, and a side surface 110C surrounding a space between the first surface 110A and the second surface 110B. In another embodiment (not shown), the housing may refer to a structure that forms the first surface 110A, the second surface 110B, and a part of the side surfaces 110C of FIG. 1. According to an embodiment, the first surface 110A may be formed by a front surface plate 102 having at least a substantially transparent part (for example, a glass plate including various coating layers, or a polymer plate). The second surface 110B may be formed by a rear surface plate 111 which is substantially opaque. The rear surface plate 111 may be formed by, for example, coated or colored glass, ceramic, a polymer, metal (for example, aluminum, stainless steel (STS), or magnesium), or a combination of at least two of the above-mentioned materials. The side surface 110C may be formed by a side surface bezel structure (or a "side surface member") 118 which is coupled with the front surface plate 102 and the rear surface plate 111 and includes metal and/or a polymer. In a certain embodiment, the rear surface plate 111 and the side surface bezel structure 118 may be integrally formed with each other, and may include the same material (for example, a metallic material such as aluminum).

In the illustrated embodiment, the front surface plate 102 may include two first areas 110D which are bent from the first surface 110A toward the rear surface plate 111 and are seamlessly extended, and are disposed on both ends of long edges of the front surface plate 102. In the illustrated embodiment (see FIG. 2), the rear surface plate 111 may include two second areas 110E which are bent from the second surface 110B toward the front surface plate 102 and are seamlessly extended, and are disposed on both ends of long edges. In a certain embodiment, the front surface plate 102 (or the rear surface plate 111) may include only one of the first areas 110D (or the second areas 110E). In another embodiment, a part of the first areas 110D or the second areas 110E may not be included. In the above-described embodiments, when viewed from a side of the electronic device 100, the side surface bezel structure 118 may have a first thickness (or width) on a side surface that does not include the first areas 110D or the second areas 110E described above, and may have a second thickness, which is thinner than the first thickness, on a side surface that includes the first areas 110D or the second areas 110E.

According to an embodiment, the electronic device 100 may include at least one of a display 101, audio modules 103, 107, 114, sensor modules 104, 116, 119, camera modules 105, 112, 113, a key input device 117, a light emitting element 106, and connector holes 108, 109. In a certain embodiment, the electronic device 100 may omit at least one of the components (for example, the key input device 117 or the light emitting element 106) or may additionally include other components.

According to an embodiment, the display 101 may be exposed through a substantial portion of the front surface plate 102, for example. In a certain embodiment, at least part of the display 101 may be exposed through the front surface plate 102 forming the first surface 110A and the first area 110D of the side surface 110C. In a certain embodiment, a corner of the display 101 may be formed substantially the same as a shape of an outer border of the front surface plate 102 adjacent thereto. In another embodiment (not shown), a gap between the outer border of the display 101 and the outer border of the front surface plate 102 may be formed substantially equally to extend from an exposed area of the display 101.

In another embodiment (not shown), a recess or an opening may be formed on a part of a screen display area of the display 101 and the electronic device may include at least one of the audio module 114, the sensor module 104, the camera module 105, and the light emitting element 106 aligned with the recess or the opening. In another embodiment (not shown), the electronic device may include at least one of the audio module 114, the sensor module 104, the camera module 105, a fingerprint sensor 116, and the light emitting element 106 disposed on a rear surface of the screen display area of the display 101. In another embodiment (not shown), the display 101 may be coupled with or may be disposed adjacent to a touch sensing circuit, a pressure sensor for measuring an intensity (pressure) of a touch, and/or a digitizer for detecting a stylus pen via a magnetic field method. In a certain embodiment, at least part of the sensor module 104, 119 and/or at least part of the key input device 117 may be disposed on the first areas 110D and/or the second areas 110E.

According to an embodiment, the audio modules 103, 107, 114 may include a microphone hole 103 and speaker holes 107, 114. The microphone hole 103 may have a microphone disposed therein to acquire an external sound, and in a certain embodiment, the microphone hole may have a plurality of microphones disposed therein to detect a direction of a sound. The speaker holes 107, 114 may include an external speaker hole 107 and a receiver hole 114 for communication. In a certain embodiment, the speaker holes 107, 114 and the microphone hole 103 may be implemented by one hole or a speaker may be included without the speaker holes 107, 114 (for example, a piezo speaker).

According to an embodiment, the sensor modules 104, 116, 119 may generate an electric signal or a data value corresponding to an internal operation state or an external environment state of the electronic device 100. The sensor modules 104, 116, 119 may include, for example, a first sensor module 104 (for example, a proximity sensor) and/or a second sensor module (not shown) (for example, a fingerprint sensor) disposed on the first surface 110A of the housing 110, and/or a third sensor module 119 (for example, an HRM sensor) and/or a fourth sensor module 116 (for example, a fingerprint sensor) disposed on the second surface 110B of the housing 110. The fingerprint sensor may be disposed not only on the first surface 110A of the housing 110 (for example, the display 101), but also on the second surface 110B. The electronic device 100 may further include a sensor module (not shown), for example, at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 104.

According to an embodiment, the camera modules 105, 112, 113 may include a first camera device 105 disposed on the first surface 110A of the electronic device 100, and a second camera device 112 and/or a flash 113 disposed on the second surface 110B. The camera modules 105, 112 may include one or a plurality of lenses, an image sensor, and/or an image signal processor. The flash 113 may include, for example, a light emitting diode or a xenon lamp. In a certain embodiment, two or more lenses (an infrared camera, a wide-angle lens and a telephoto lens) and image sensors may be disposed on one surface of the electronic device 100.

According to an embodiment, the key input device 117 may be disposed on the side surface 110C of the housing 110. In another embodiment, the electronic device 100 may not include a part or an entirety of the key input devices 117 mentioned above, and the key input device 117 that is not included may be implemented on the display 101 in other forms such as a soft key. In a certain embodiment, the key input device may include the sensor module 116 disposed on the second surface 110B of the housing 110.

According to an embodiment, the light emitting element 106 may be disposed on the first surface 110A of the housing 110, for example. For example, the light emitting element 106 may provide state information of the electronic device 100 in the form of light. In another embodiment, the light emitting element 106 may provide a light source interlocking with an operation of the camera module 105. The light emitting element 106 may include, for example, a light emitting diode (LED), an infrared LED (IR LED), and a xenon lamp.

According to an embodiment, the connector holes 108, 109 may include a first connector hole 108 to accommodate a connector (for example, a USB connector) for exchanging power and/or data with an external electronic device, and/or a second connector hole (for example, an earphone jack) 109 to accommodate a connector for exchanging an audio signal with an external electronic device.

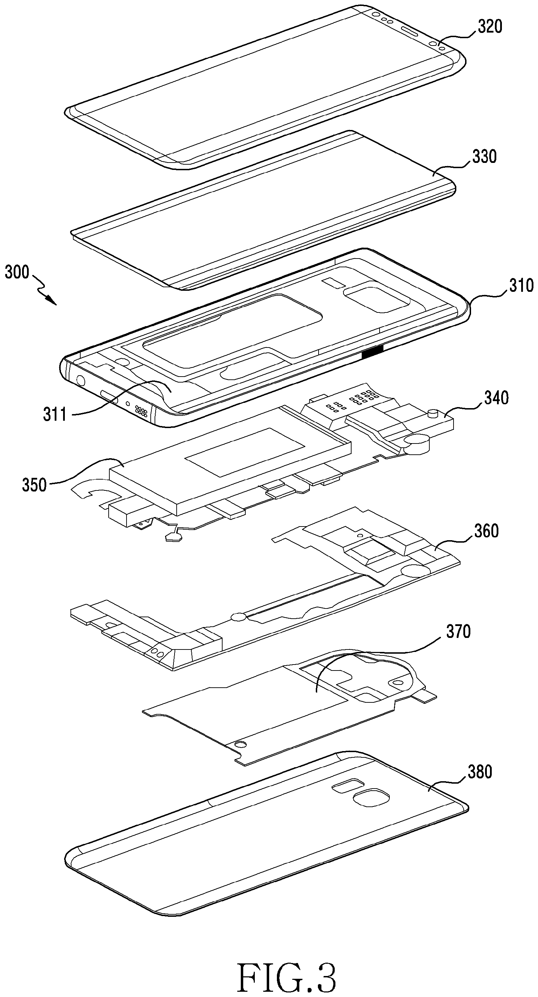

FIG. 3 is an exploded perspective view illustrating main inner parts of an electronic device according to an embodiment of the disclosure.

Referring to FIG. 3, the electronic device 300 according to an embodiment may include a side bezel structure 310, a first support member 311 (for example, a bracket), a front surface plate 320, a display 330, a printed circuit board 340, a battery 350, a second support member 360 (for example, a rear case), an antenna 370, and a rear surface plate 380. In a certain embodiment, the electronic device 300 may omit at least one of the components (for example, the first support member 311 or the second support member 360) or may additionally include other components. At least one of the components of the electronic device 300 may be the same as or similar to at least one of the components of the electronic device 100 of FIG. 1 or 2, and a redundant explanation thereof will be omitted.

According to an embodiment, the first support member 311 may be disposed in the electronic device 300 to be connected with the side bezel structure 310 or may be integrally formed with the size bezel structure 310. The first support member 311 may be formed of a metallic material and/or a non-metallic material (for example, a polymer). The first support member 311 may have one surface coupled with the display 330 and the other surface coupled with the printed circuit board 340. A processor, a memory, and/or an interface may be mounted on the printed circuit board 340. The processor may include, for example, one or more of a central processing device, an application processor, a graphic processing unit, an image signal processor, a sensor hub processor, or a communication processor.

According to an embodiment, the memory may include, for example, a volatile memory or a non-volatile memory.

According to an embodiment, the interface may include, for example, a high definition multimedia interface (HDMI), a universal serial bus (USB) interface, an SD card interface and/or an audio interface. The interface may electrically or physically connect the electronic device 300 to an external electronic device, and may include a USB connector, an SD card/MMC connector, or an audio connector.

According to an embodiment, the battery 350 is a device for supplying power to at least one component of the electronic device 300, and for example, may include a primary battery which is not rechargeable, or a rechargeable secondary battery or a fuel cell. At least a part of the battery 350 may be disposed on substantially the same plane as the printed circuit board 340. The battery 350 may be integrally disposed in the electronic device 300, or may be attachably and detachably disposed in the electronic device 300.

According to an embodiment, the antenna 370 may be disposed between the rear surface plate 380 and the battery 350. The antenna 370 may include, for example, a near field communication (NFC) antenna, a wireless charging antenna, and/or a magnetic secure transmission (MST) antenna. The antenna 370 may perform short-range communication with an external device, or may wirelessly transmit and receive power necessary for charging. In another embodiment, an antenna structure may be formed by a part of the side bezel structure 310 and/or the first support member 311 or a combination thereof.

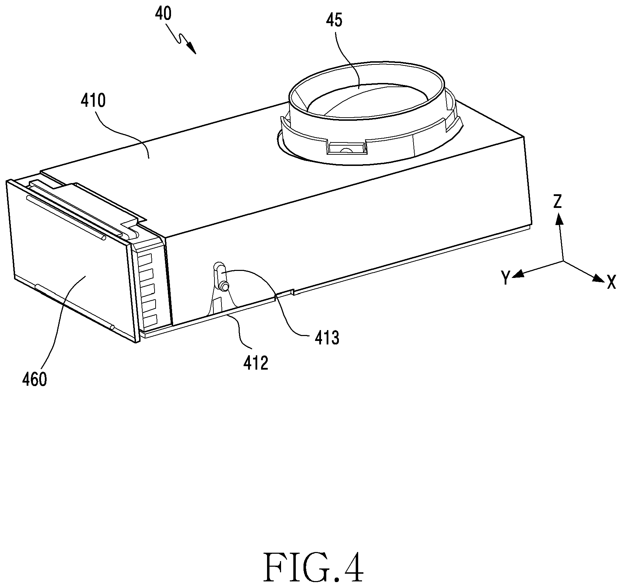

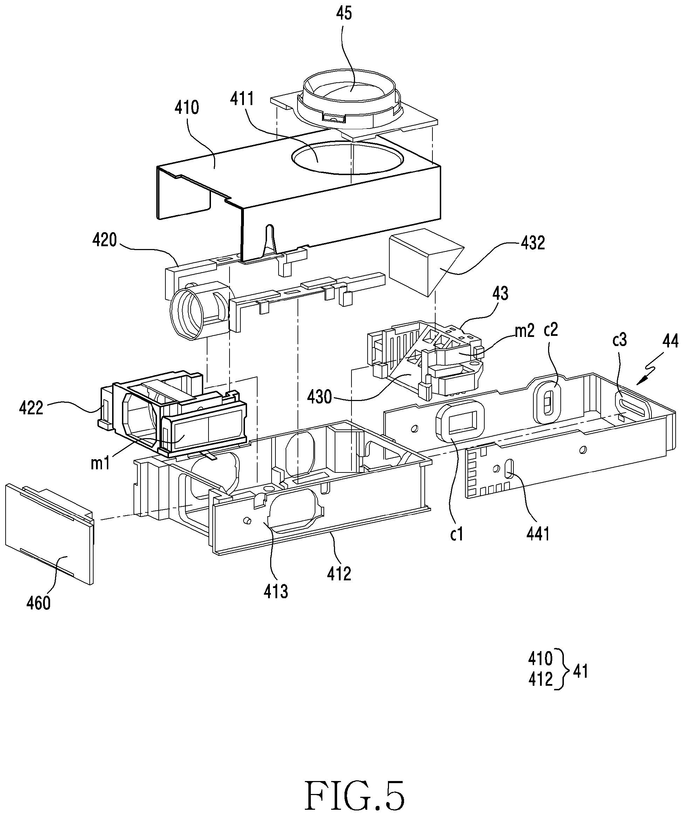

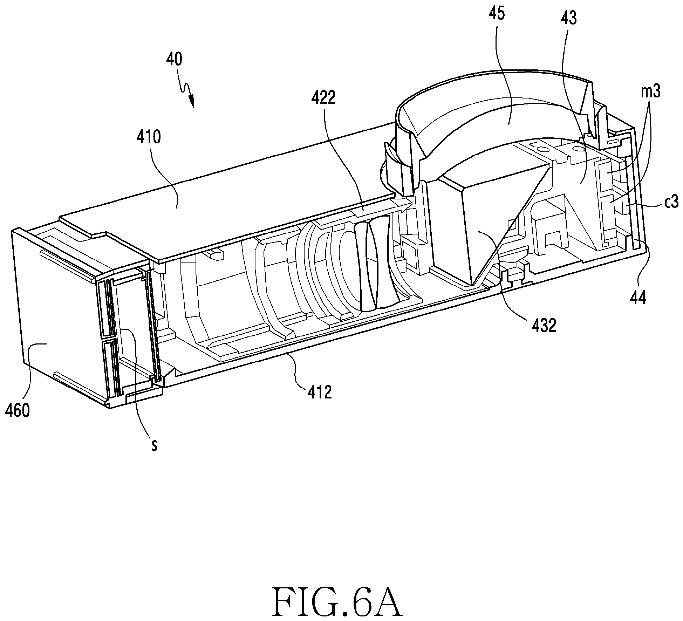

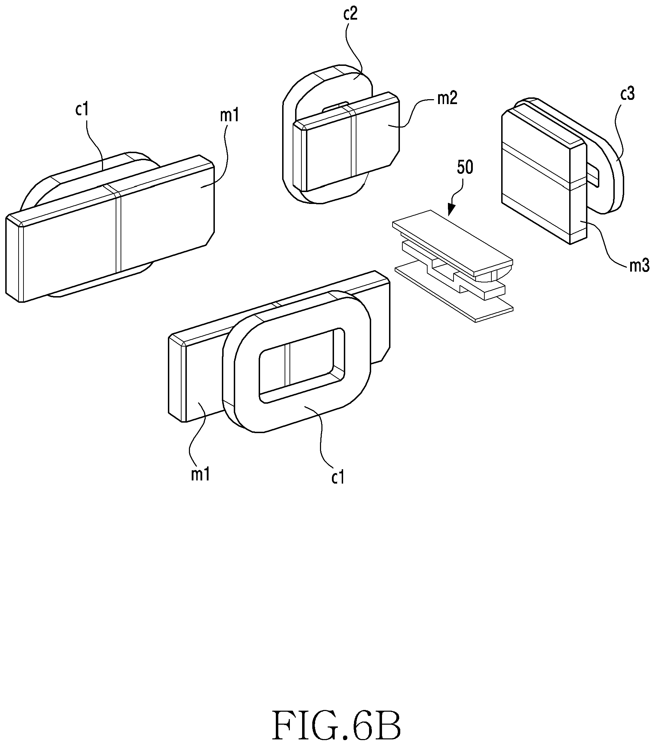

FIG. 4 is a perspective view illustrating an exterior of a camera module according to an embodiment of the disclosure. FIG. 5 is an exploded perspective view illustrating an inner structure of the camera module according to an embodiment of the disclosure. FIG. 6A is a cross-sectional view illustrating the camera module cut along a transverse direction. FIG. 6B is a perspective view illustrating a lens drive unit of the camera module according to an embodiment of the disclosure.

Referring to FIGS. 4 to 6B, at least one camera module 40 according to an embodiment may be disposed on a front surface area and/or a rear surface area of an electronic device (for example, the electronic device 100 shown in FIGS. 1, 2). According to an embodiment, the camera module 40 may be a camera module 40 having a two or more times high magnification zoom camera function among the camera modules 40 disposed in a mobile electronic device. For example, the camera module 40 may perform a 2 to 100 times high magnification zoom function.

According to an embodiment, the camera module 40 may be a camera module of a type that forms an optical path by bending an optical axis once by using an optical member 432. For example, the optical member 432 may include a reflection member such as a prism or a mirror. The bending angle of the optical axis may be about 90 degrees.

According to an embodiment, the camera module 40 may include an optical member holder 43 for mounting the optical member 432 and an image stabilization unit m2, c2; m3, c3. According to an embodiment, the optical member holder 43 may have an optical member mounting recess 430 formed thereon to have the optical member 432 mounted therein. For example, the optical member mounting recess 430 may have an open space of a triangular prism shape.

According to an embodiment, the camera module 40 may include a lens housing 41 to accommodate a plurality of optical components. The lens housing 41 may include an upper lens housing 410 and a lower lens housing 412. The upper lens housing 410 may have an opening 411 formed thereon to have an entrance lens 45 mounted therein.

According to an embodiment, the lens housing 41 may include, along an optical axis, an auto-focusing unit m1, c1, an image stabilization unit m2, c2: m3, c3, an image sensor s, a lens system 422, and a flexible printed circuit board 44. According to an embodiment, the optical path of the camera module 40 may include a path in which light entering through the entrance lens 45 has its optical axis bent by about 90 degrees through the optical member 432, and then passes through the lens system 422, and finally arrives at the image sensor s. The entrance lens 45 through which image light enters first may be omitted from the camera module. According to an embodiment, the auto-focusing unit 422 may provide a drive force for auto focusing of the lens system 422. Reference numeral 420 may indicate an upper lens frame coupled to the lens system.

According to an embodiment, the camera module 40 may be divided into a fixing part and a moving part. The fixing part may include the lens housing 41, and the moving part may include the optical member holder and the lens system which move for auto-focusing and/or image stabilization within the fixing part.

According to an embodiment, the auto-focusing unit may include at least one auto-focusing magnet m1 and at least one auto-focusing coil c1. The auto-focusing unit m1, c1 may provide a drive force to move the lens system 422 in an optical axis direction within the lens housing 41. The auto-focusing unit may additionally include the upper lens frame 420. The upper lens frame 420 may have a light emission lens disposed therein, and the lens system 422 may have a plurality of lenses including at least one concave lens and/or convex lens disposed therein.

According to an embodiment, the image stabilization unit disposed opposite the entrance lens 45 of the lens housing 41 may include a pitching drive unit m2, c2, a yawing drive unit m3, c3, and a centering unit (for example, illustrated in FIG. 6) 50. According to an embodiment, the pitching drive unit m2, c2 may be disposed on one surface of the optical member holder 43, and the yawing drive unit m3, c3 may be disposed on another surface neighboring the one surface. For example, the pitching drive unit m2, c2 and the yawing drive unit m3, c3 may be disposed to form the right angle with respect to each other.

According to an embodiment, the pitching drive unit m2, c2 may include a pitching magnet m2 and a pitching coil c2. The pitching magnet m2 may be disposed on the optical member holder 43, and the pitching coil c2 may be disposed on the flexible printed circuit board 44. According to an embodiment, the pitching magnet m2 and the pitching coil c2 may be disposed to face each other, thereby providing a rotational force with reference to a pitching axis. According to an embodiment, the yawing drive unit m3, c3 may include a yawing magnet m2 and a yawing coil c3. The yawing magnet m3 may be disposed on the optical member holder 43 and the yawing coil c3 may be disposed on the flexible printed circuit board 44. According to an embodiment, the yawing magnet m3 and the yawing coil c3 may be disposed to face each other, thereby providing a rotational force with reference to a yawing axis.

According to an embodiment, the flexible printed circuit board 44 may be disposed along a side surface of the lower lens housing 41 to electrically connect the auto-focusing coil c1, the pitching coil c2, and the yawing coil c3 to a circuit board 460. The flexible printed circuit board 44 may be constrained to the lower lens housing 41 by a fixing structure. For example, the fixing structure may include a fixing protrusion 413 formed on a side surface of the lower lens housing 412, and a fixing hole 441 formed on the flexible printed circuit board 44 to have the fixing protrusion 413 inserted thereinto.

According to an embodiment, the optical member holder 43 may have the optical member mounting recess 430 to have the optical member 432, for example, a prism, mounted thereon. The optical member 432, the prism of the triangular prism shape, may be mounted on the mounting recess 430 to reflect and emit incident light toward the image sensor. For example, the light emission direction may be bent by about 90 degrees from the incident light.

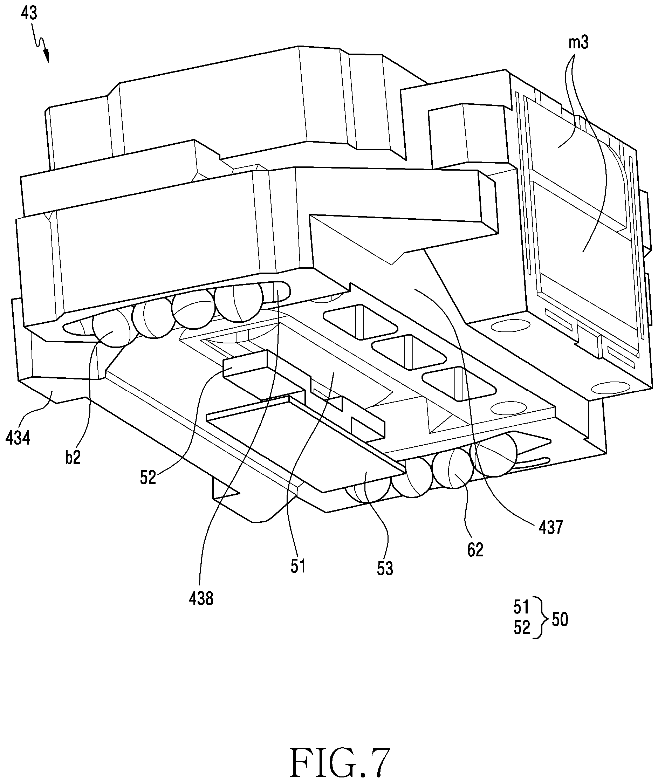

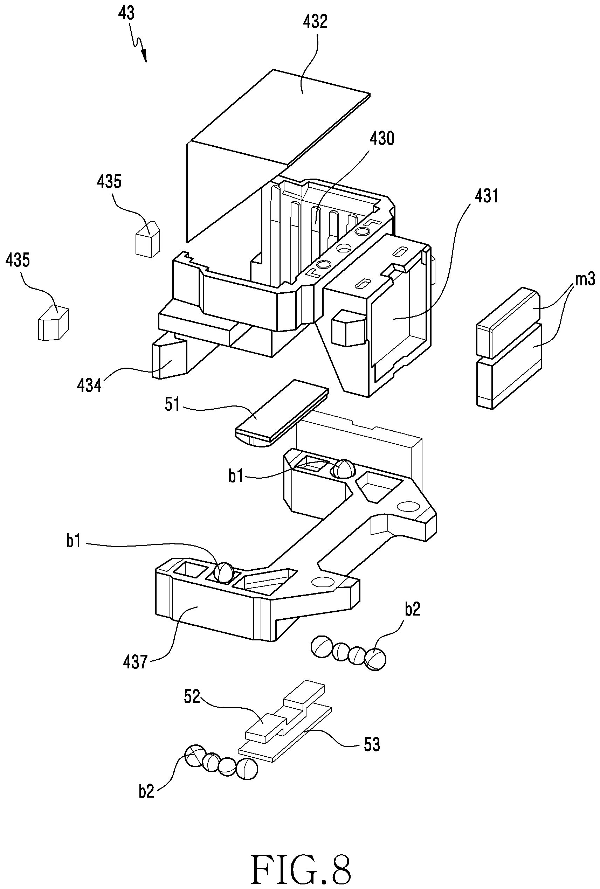

FIG. 7 is a perspective view illustrating an optical member holder according to an embodiment of the disclosure. FIG. 8 is an exploded perspective view illustrating the optical member holder according to an embodiment of the disclosure.

Referring to FIGS. 7, 8, a rotation guide 437 may additionally be assembled with the optical member holder 43 having the optical member 432 mounted thereon. The rotation guide 437 may be coupled to the optical member holder 43 to guide rotation of the optical member holder around the yawing axis.

According to an embodiment, the optical member holder 43 may have a pivot ball *b* disposed therein to rotate along the pitching axis. The pivot balls *b* may be disposed to be symmetrical to each other with reference to the rotation guide. According to an embodiment, the pivot ball b may be positioned between the optical member holder 43 and the rotation guide 437 to make the optical member holder 43 rotatable with reference to the pitching axis. For example, the pivot ball b may be one ball that is disposed to be symmetrical to another one.

According to an embodiment, the optical member holder 43 may be disposed to be rotatable with reference to the yawing axis by the rotation guide 437 and a guide ball b2. According to an embodiment, the guide ball b2 may be disposed between the rotation guide 437 and the lower lens housing (for example, the lower lens housing 412 shown in FIG. 5) to make the rotation guide 437 rotatable with reference to the yawing axis. According to an embodiment, a guide groove 438 may be formed on a bottom surface of the rotation guide 437 to accommodate the guide ball b2. According to an embodiment, the guide grooves 438 may be formed to be symmetrical to each other and may have a curved shape with a curvature. For example, a plurality of guide balls b2 may be provided, and the plurality of guide balls b2 may be disposed to be symmetrical to each other.

According to an embodiment, the optical member holder 43 may have a mounting recess 431 formed on one surface thereof to have a yawing magnet m3 disposed thereon.

According to an embodiment, the optical member holder 43 may include a centering unit 50. According to an embodiment, the centering unit 50 may be a drive unit that provides a return force to stably center the optical member holder 43 with reference to the pitching axis and the yawing axis, thereby minimizing centering current consumption for image stabilization.

According to an embodiment, the centering unit 50 may include a centering magnet 51 and a centering yoke 52 which the centering magnet 51 acts on via the force of attraction. According to an embodiment, the centering magnet 51 may be disposed on a bottom surface of the optical member holder 43, and the centering unit 50 may be disposed in the lower lens housing 412. The centering magnet 51 may be spaced apart from the centering yoke 52 by a predetermined distance, and may be disposed in parallel therewith to face each other. For example, the centering magnet 51 may be disposed with any one structure of combinations of magnets of one pole (N-pole or S-pole) or both poles (N-pole and S-pole). For example, the centering yoke 52 may be formed with a metal piece in a plate shape, and may be extended up to a length to face the centering magnet 51.

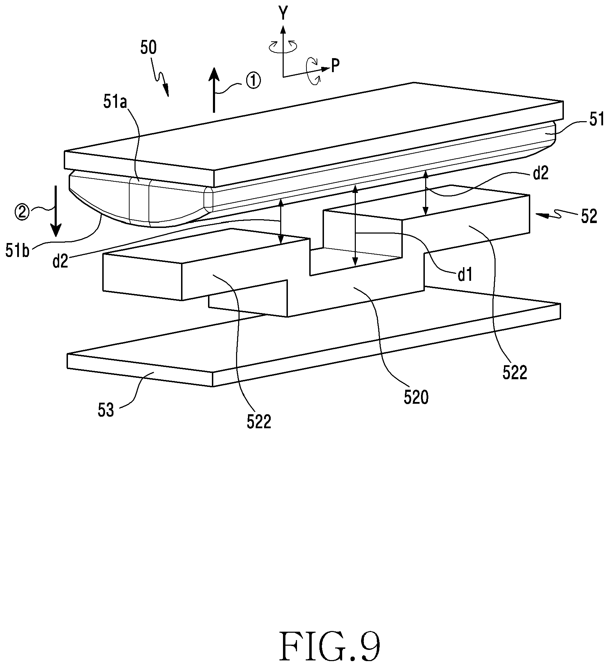

FIG. 9 is a perspective view illustrating a centering unit of an image stabilization unit according to an embodiment of the disclosure.

Referring to FIG. 9, the centering unit 50 according to an embodiment may be a drive source that is rotatable with reference to a pitching axis P and a yawing axis Y, and may include a centering magnet 51 which includes a first surface 51a facing a first direction (for example, an upward direction) ①, and a second surface 51b facing a second direction (for example, a downward direction) ② opposite to the first direction ①. The first surface 51a may be a planar surface and the second surface 51b may be a curved surface. According to an embodiment, the centering magnet 51 may have a semi-cylindrical shape and may be convex in the second direction ②. According to an embodiment, the centering magnet 51 may extend along the pitching axis P. For example, the centering magnet 51 may be a single pole (for example, N-pole or S-pole) magnet or may include one structure of combinations of both-poles magnets (N-pole and S-pole).

According to an embodiment, the centering yoke 52 may be a metal member that extends in the direction of the pitching axis P and is disposed in parallel with the centering magnet 51 to face each other, and may include a center part 520 and both end parts 522. The center part 520 may be spaced apart from the centering magnet 51 by a first distance d1, and the both end parts 522 may be spaced apart from the centering magnet 51 by a second distance d2, respectively. According to an embodiment, the centering unit 50 may have the center part 520 and the both end parts 522 which are integrally formed with each other, and may have a stepped shape between the center part 520 and the both end part 522.

According to an embodiment, the centering yoke 52 may further include a shield yoke 53. According to an embodiment, the shield yoke 53 may be installed to increase a centering force and to block a leakage magnetic flux. According to an embodiment, the shield yoke 53 may extend along the pitching axis P, and may be disposed in parallel with the centering yoke 52 to face each other. For example, the shield yoke 53 may have a flat plate shape and may be made of a non-magnetic material.

According to an embodiment, the disclosure is not necessarily limited to the structure in which the centering magnet 51 is disposed in the optical member holder 43 and the centering yoke 52 is disposed in the lower lens housing 412. The centering magnet 51 may be disposed in the lower lens housing 412 and the centering yoke 52 may be disposed in the optical member holder 43.

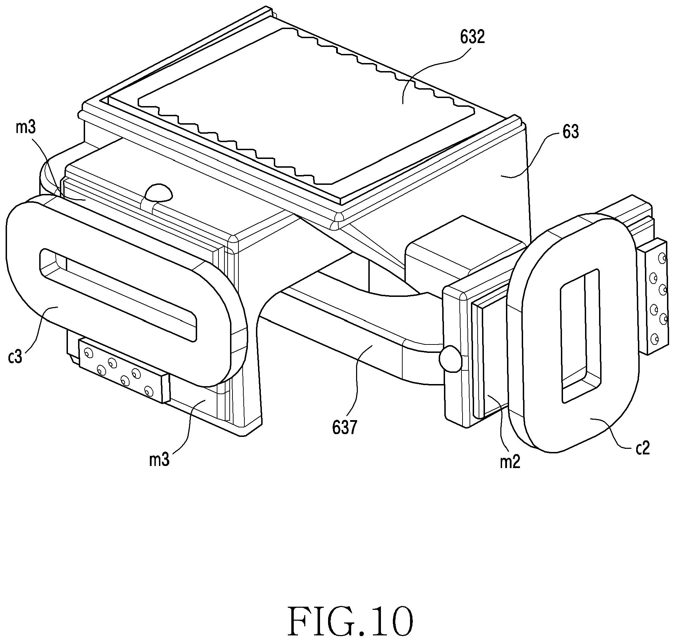

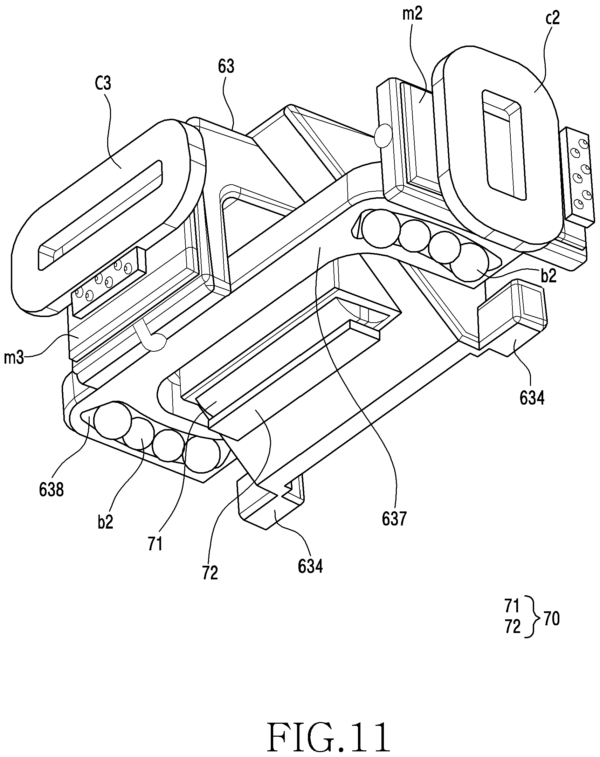

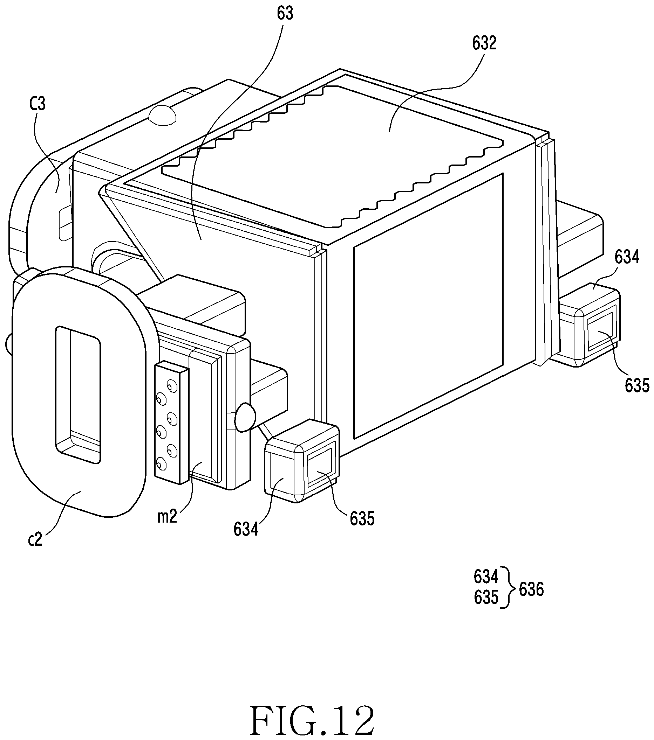

FIGS. 10 to 12 are perspective views illustrating the optical member holder according to an embodiment of the disclosure.

Referring to FIGS. 10 to 12, the optical member holder 43 is an optical member holder 63 that is modified from the optical member holder 43 shown in FIGS. 7 and 8, and may have a basic structure similar to the optical member holder 43.

According to an embodiment, a C or U-shaped rotation guide 637 may further be coupled to the optical member holder 63 on which an optical member 632 is mounted. According to an embodiment, a pivot ball b may be disposed to make the optical member holder 63 rotatable along a pitching axis. The pivot balls (for example, the pivot ball b1 shown in FIG. 8) may be disposed on the rotation guide 637 to be symmetrical to each other. According to an embodiment, the pivot ball b1 may be positioned between the optical member holder 63 and the rotation guide 637 to make the optical member holder 63 rotatable with reference to the pitching axis. For example, one pivot ball b may be disposed on the rotation guide 637 to be symmetric to another one.

According to an embodiment, the optical member holder 63 may be disposed to be rotatable with reference to a yawing axis by the rotation guide 637 and a guide ball b2. According to an embodiment, the guide ball b2 may be disposed between the rotation guide 637 and the lower lens housing 41 to make the rotation guide 637 rotatable with reference to the yawing axis. According to an embodiment, a guide recess 638 may be formed on a bottom surface of the rotation guide 637 to accommodate the guide ball b2. According to an embodiment, the guide grooves 638 may be formed to be symmetrical to each other and may be bent with a curvature. For example, a plurality of guide balls b2 may be provided and the plurality of guide balls may be disposed to be symmetrical to each other.

According to an embodiment, the optical member holder 63 may have a mounting recess formed on one surface thereof to have a pitching magnet m2 disposed thereon, and a mounting recess formed on another surface neighboring the one surface to have a yawing magnet m3 disposed thereon. According to an embodiment, the pitching magnet m2 may be disposed to face a pitching coil c2, and the yawing magnet m3 may be disposed to face a yawing coil c3.

According to an embodiment, the optical member holder 63 may include a centering unit 70. According to an embodiment, the centering unit 70 may be a drive unit that provides a return force to stably center the optical member holder 63 with reference to the pitching axis and the yawing axis, thereby minimizing centering current consumption for image stabilization.

According to an embodiment, the centering unit 70 may include a centering magnet 71 and a centering yoke 72 which the centering magnet 71 acts on via the force of attraction. According to an embodiment, the centering magnet 71 may be disposed on a bottom surface of the optical member holder 73, and the centering yoke 72 may be disposed in a lower lens housing (for example, the lower lens housing 412 shown in FIG. 5). The centering magnet 71 may be spaced apart from the centering yoke 72 by a predetermined distance, and may be disposed to face the centering yoke.

According to an embodiment, the optical member holder 63 may include a mass balancer 636. The mass balancer 636 may include a mass balancer mounting portion 634 and a mass balancer member 635. According to an embodiment, the optical member holder 63 may include mass balancer mounting portions 634 which are symmetrical to each other, and the mass balancer member 635 may be disposed on the mass balancer mounting portion 634.

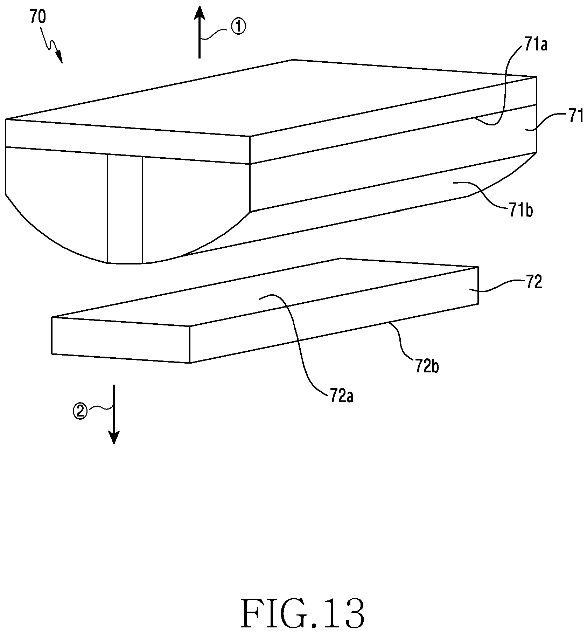

FIG. 13 is a perspective view illustrating a centering unit of an image stabilization unit according to an embodiment of the disclosure.

Referring to FIG. 13, comparing the centering unit 50 shown in FIG. 9, the centering unit 90 according to an embodiment may have the same centering magnet 51 but differs therefrom in the structure of the centering yoke 52. Therefore, the centering magnet 71 will not be described in detail and only the structure of the centering yoke 72 will be described.

According to an embodiment, the centering yoke 72 may be a metal member that extends in the pitching axis direction and is parallel to a first surface 71a of the centering magnet and is disposed to face the centering magnet 71, and may have a planar plate shape. The centering yoke 72 may be disposed to face the centering magnet 51 and may be disposed in parallel with the top surface of the centering magnet 51. Due to a centering force generated between the centering magnet 71 and the centering yoke 72, the optical member holder 63 may maintain a restoring force to maintain the centering state regardless of whether power is applied. According to an embodiment, even when the centering magnet 71 slightly rotates forward and backward with reference to the pitching axis, a minimum distance between a second surface 71b of the centering magnet 71 and the centering yoke 72 may be substantially maintained, such that the centering force provided by the centering unit 70 is constantly maintained.

According to an embodiment, the disclosure is not limited to the structure in which the centering magnet 71 is disposed in the optical member holder 63 and the centering yoke 72 is disposed in the lower lens housing 412, and the centering magnet 71 may be disposed in the lower lens housing 412 and the centering yoke 72 may be disposed in the optical member holder 63.

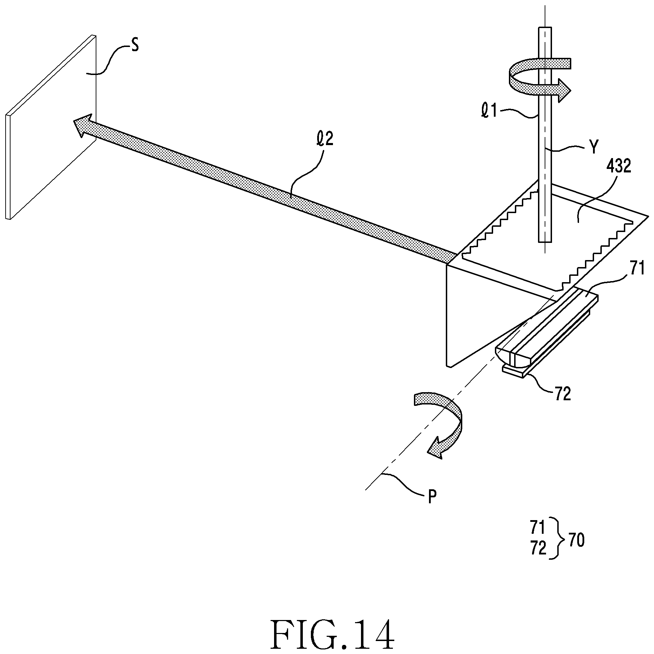

FIG. 14 is a view schematically illustrating an arrangement of the centering unit according to an embodiment of the disclosure.

Referring to FIG. 14, the suction unit 70 may be disposed to be rotatable along a pitching axis P, and to be rotatable along a yawing axis Y. According to an embodiment, the centering unit 70 may be disposed under the optical member 432. According to an embodiment, the centering magnet 71 and the centering yoke 72 constituting the centering unit 70 may be disposed to face incident light 11.

According to an embodiment, the centering unit 70 may be disposed to face the incident light 11, but the disclosure is not limited to this structure. For example, the suction unit 70 may be disposed to face emitted light 12 (for example, toward the image sensor s).

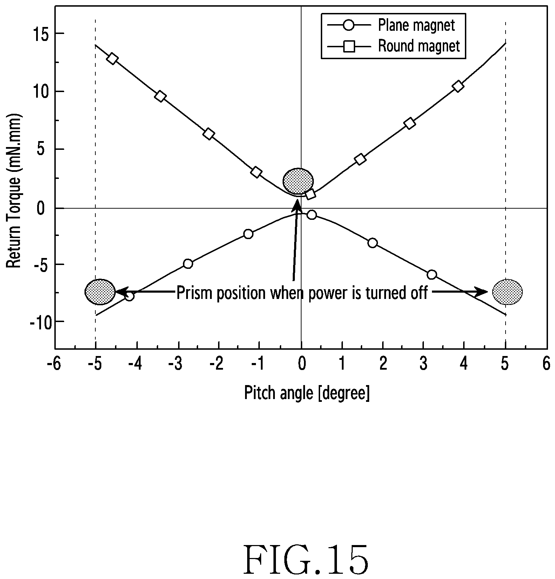

FIG. 15 is a view illustrating changes in the return torque by a magnetic centering force without considering errors of a mass center and a rotation center of a moving part (for example, the optical member holder 43) of the camera module 40.

When the centering magnet is a plane magnet, the negative return torque is generated except for at the center. This means that there is always a rotational force to move away from the center and the rotational force is biased toward a stopper surface at one side when a current is not applied to a coil. That is, positions of the stoppers at both ends may be stable.

When the centering magnet is a round magnet (for example, the centering magnet 51 shown in FIG. 9), the positive return torque is generated except for at the center. This means that the rotational force to return increases as it moves away from the center and always moves toward the center, and returns to the center even when a current is not applied to the coil.

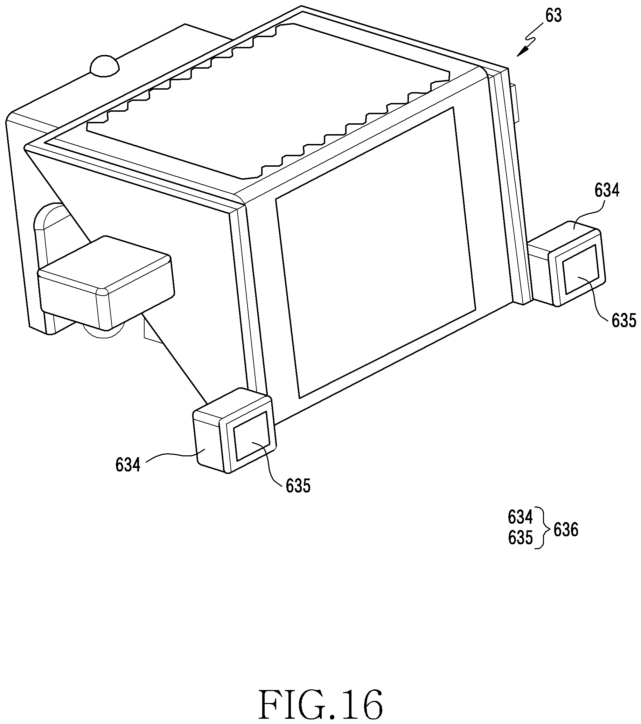

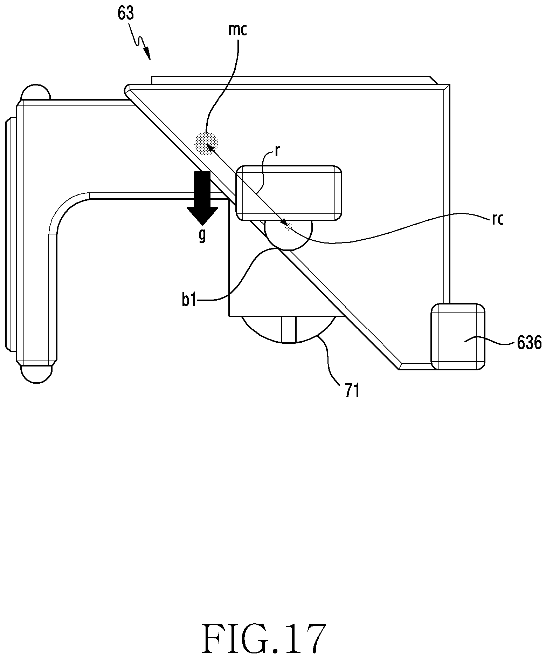

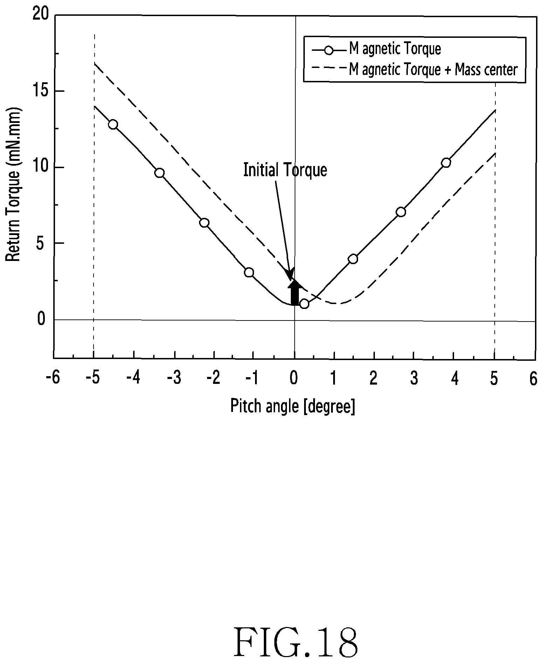

FIG. 16 is a perspective view illustrating a mass balancer disposed on an optical member holder according to an embodiment of the disclosure. FIG. 17 is a view of one side of FIG. 16. FIG. 18 is a graph showing changes in the return torque when the mass center of the optical member holder is considered according to an embodiment of the disclosure.

Referring to FIGS. 16 to 18, even if the magnetic centering force is accurately centered, when an error occurs between the mass center mc and the rotation center b1, a rotation torque occurs in proportion to a distance *r*, and this occurs as an initial torque, causing a centering current to increase.

To solve this structural problem, the optical member holder according to an embodiment (for example, the optical member holder 43 shown in FIG. 7) may include a mass balancer 636. According to an embodiment, the optical member holder 63 may have at least one mass balancer 436 disposed at the opposite point of the mass center *mc* with reference to the rotation center *rc* (for example, the first ball b1).

According to an embodiment, the mass balancer 436 may include a mass balancer mounting portion 634 formed on the optical member holder 63, and a mass balancer member 635 mounted in the mass balancer mounting portion 634. For example, the mass balancers 636 may be disposed on the optical member holder 63 to be symmetrical to each other.

**[Table 1]**

| Moving mass | Mass center distance | Initial torque | Max return force | Changes |
|---|---|---|---|---|
| 0.42 g | 0.5 mm | 2.7 Mn.mm | 14 Mn.mm | About 20% |

[Table 1] shows change in the return force by inconsistency between the mass center b1 and the rotation center *rc*. [Table 1] shows the amount of initial torque occurring when the mass center *mc* and the rotation center *rc* are distanced from each other by 0.5 mm in a specific pose. This may be 20% of the total return torque.

FIG. 18 is a graph showing changes in the return torque when the mass center is considered.

Referring to FIG. 18, FIG. 18 shows occurrence of a torque to a difference between the mass center *mc* and the rotation center *rc* when a moving part (for example, the optical member holder) moves in a pitch direction. Even when the mass center *mc* moves away from the center mass *rc* and the rotation torque increases, centering power consumption may be minimized by adding an asymmetric yoke shape and a mass balancer 436.

**[Table 2]**

| Pitch | Mass center distance [mm] | | | mass | Self-weight torque [gf.mm] |
|---|---|---|---|---|---|
| | X | Y | Z | | |
| Mass balancer X | -0.00192 | 0.271 | 0.397 | 0.443g | 0.213 |
| Mass balance O | -0.00186 | 0.168 | 0.336 | 0.457g | 0.176 |

[Table 2] above shows changes in the torque caused by the self-weight according to the presence/absence of the mass balancer 636.

According to an embodiment, the optical member holder 63 may implement a structure to reduce or offset a momentum by applying the mass balancer 636 member.

When the distance *r* from the rotation center *rc* of the optical member holder 43 is small, the torque may decrease and power consumption caused by the initial torque may be reduced. As a way of reducing *r*, the mass balancer 636 may be added at the opposite side of the direction of the mass center *mc* with reference to the rotation center *rc.*

When the mass balancer 636 is added to the optical member holder 63, there is an effect that *r* decreases as shown in [Table 2], and the torque caused by the self-weight decreases, and hence, an offset current for centering may decrease. However, this structure may result in an increase in the moment of inertia which acts as a load in rotating, and thus, it may be necessary to appropriately adjust.

That is, considering the position of the mass center *mc* and the amount of rotation torque caused by gravity, the mass balancer 636 may be applied to provide an offset. Typically, the optical member (for example, the optical member 432 shown in FIG. 5), for example, a prism, may have a triangular prism shape of an asymmetrical shape with reference to a rotation axis, and accordingly, the mass center may be shifted to an upper side (incident surface), and a drive magnet is disposed on the rear or a side surface of the camera module 40 due to characteristics of the camera module 40, such that the mass center is shifted. Here, the mass balancer 636 may be disposed at a lower end of an exit surface to be able to reduce the position of *r,* and the mass balancer 636 may be formed of a metallic material having high specific gravity.

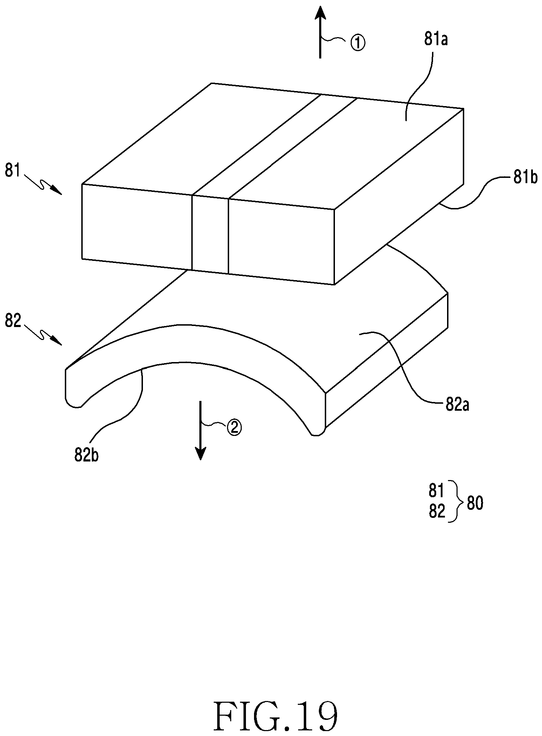

FIG. 19 is a perspective view illustrating a centering unit of an image stabilization unit according to an embodiment of the disclosure.

Referring to FIG. 19, the centering unit 80 may include a plane centering magnet 81 and a centering curved yoke 82. Descriptions of the same components of the centering unit 80 of FIG. 19 as those of the centering unit 50 of FIG. 9 are omitted to avoid redundant descriptions and only different structures will be described in detail.

According to an embodiment, the centering magnet 81 may have a plate shape, and may include a first surface 81a facing a first direction ① (for example, vertically upward direction), and a second surface 51b facing a second direction ② (for example, vertically downward direction) which is opposite to the first direction ①. For example, the first surface 51a and the second surface 51b may be plane surfaces.

According to an embodiment, the centering curved yoke 82 may include a third surface 82a facing the first direction ① and a third surface 82b facing the second direction ② which is opposite to the first direction ①. For example, the third surface 82a and the fourth surface 82b may be curved surfaces. The third surface 82a and the fourth surface 82b may be curved surfaces having radii of curvature. According to an embodiment, the centering curved yoke 82 may be convex in the first direction ①.

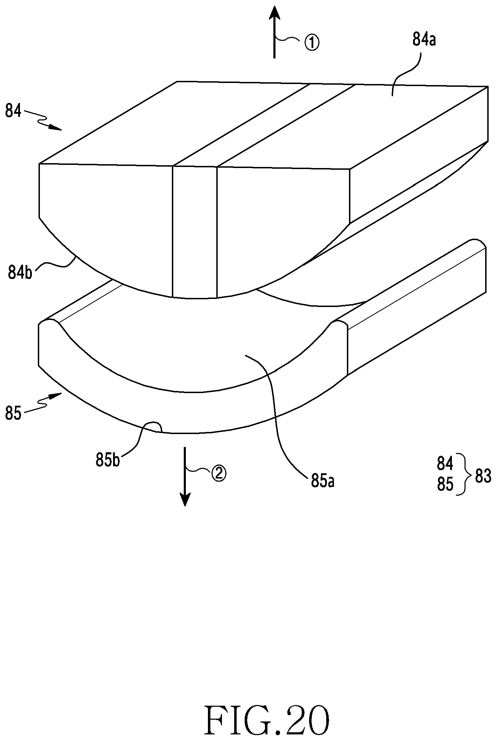

FIG. 20 is a perspective view illustrating a centering unit of an image stabilization unit according to an embodiment of the disclosure.

Referring to FIG. 20, the centering unit 83 may include an asymmetric centering magnet 84 and a centering curved yoke 85. Descriptions of the same components of the centering unit 83 of FIG. 20 as those of the centering unit 50 of FIG. 9 are omitted to avoid redundant descriptions and only different structures will be described in detail.

According to an embodiment, the centering magnet 84 may include a first surface 84a facing a first direction ① (for example, vertically upward direction), and a second surface 84b facing a second direction ② (for example, vertically downward direction) which is opposite to the first direction ①. For example, the first surface 84a may be a plane surface and the second surface 84b may be a curved surface. The curved surface 84b may be convex in the second direction ②.

According to an embodiment, the centering curved yoke 85 may include a third surface 85a facing the first direction ① and a fourth surface 85b facing the second direction ② which is opposite to the first direction ①. For example, the third surface 85a and the fourth surface 85b may be curved surfaces. The third surface 85a and the fourth surface 85b may be curved surfaces having radii of curvature. According to an embodiment, the centering curved yoke 85 may be convex in the second direction ②.

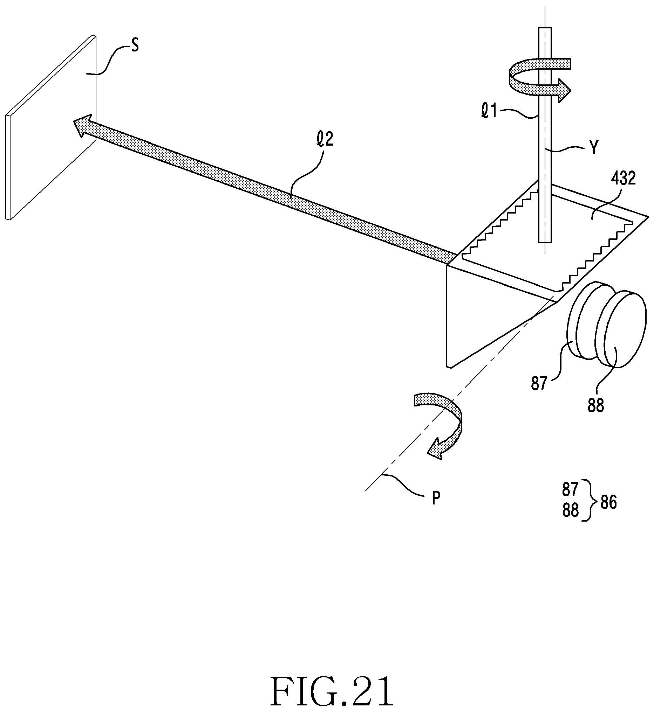

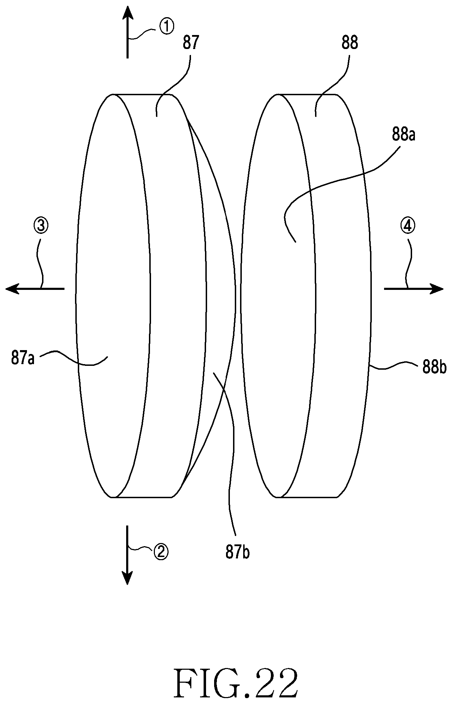

FIG. 21 is a view schematically illustrating an arrangement of a centering unit according to an embodiment of the disclosure. FIG. 22 is a perspective view illustrating a centering unit of an image stabilization unit according to an embodiment of the disclosure.

Referring to FIGS. 21, 22, the centering unit 86 according to an embodiment may be disposed to be perpendicular to a pitching axis P and a yawing axis Y, and to face emitted light 12 toward the image sensor s. According to an embodiment, the centering unit 86 may include a centering magnet 87 and a centering yoke 88.

According to an embodiment, the centering magnet 87 may include a first surface 87a disposed to face a third direction ③ which is perpendicular to the first and second directions ①, ②, and a second surface 87b disposed to face a fourth direction ④ which is opposite to the third direction ③. The first surface 87a is a plane surface and the second surface 87b having a radius of curvature may be a curved surface. The second surface 87b may be convex in the fourth direction ④. For example, the centering magnet 87 may be circular when viewed at a distance therefrom in the third direction ③.

According to an embodiment, the centering yoke 88 may be spaced apart from the centering magnet 87 and they may face each other. According to an embodiment, the centering yoke 88 may include a third surface 88a facing the third direction ③ and a fourth surface 88b facing the fourth direction ④. The third surface 88a and the fourth surface 88b may be plane surfaces. For example, the centering yoke 88 may be circular when viewed at a distance therefrom in the third direction ③.

According to an embodiment, an electronic device may include at least one camera module, wherein the camera module includes a lens housing which comprises, along an optical axis, an image stabilization unit, an auto-focusing drive unit, a lens system and an image sensor, wherein the image stabilization unit includes: an optical member configured to reflect incident light and to output the reflected image light to the image sensor; an optical member holder which has the optical member disposed therein and is disposed to be rotatable with reference to a pitching axis and a yawing axis; a pitching drive unit which is disposed in the lens housing to provide a force to allow the optical member holder to rotate with reference to the pitching axis; a yawing drive unit which is disposed in the lens housing to provide a force to allow the optical member holder to rotate with reference to the yawing axis; and a centering unit which is disposed between the lens housing and the optical member holder to provide a centering force of the optical member holder, wherein the centering unit includes: a centering magnet which is disposed in the optical member holder and comprises a first surface facing a first direction and a second surface facing the opposite direction of the first direction, the second surface being formed in a curved shape; and a centering yoke which is disposed in the lens housing and disposed to face the second surface, spaced apart from the second surface, the centering yoke being parallel to the first surface.

According to an embodiment, the centering magnet may extend along the pitching axis.

According to an embodiment, the second surface may have an asymmetrical shape and may be convex in the second direction.

According to an embodiment, the centering magnet may have a substantially semi-cylindrical shape.

According to an embodiment, the centering yoke may extend along the pitching axis and may be disposed to face the centering magnet.

According to an embodiment, the centering yoke may include: a center part which is spaced apart from the second surface by a first distance; and both end parts which are spaced apart from the second surface by a second distance which is smaller than the first distance, respectively, and are integrally formed with the center part.

According to an embodiment, the centering yoke may further include a shield yoke which is disposed in the lens housing and is disposed to face the second direction.

According to an embodiment, the shield yoke may extend along the pitching axis and may be disposed in parallel with the centering yoke.

According to an embodiment, the optical member holder may further include a mass balancer, and the mass balancer may be disposed at a point substantially opposite to a mass center of the optical member holder with reference to a rotation center of the optical member holder.

According to an embodiment, the mass balancer may be made of a non-magnetic material and the mass balancers may be disposed to be symmetric to each other with reference to the optical member holder.

According to an embodiment, the centering yoke may have a plane plate shape and may be disposed in parallel with the centering magnet to face the centering magnet.

According to an embodiment, the centering unit may be disposed under the optical member holder, and may be disposed to face the incident light of the camera module.

According to an embodiment, there is provided at least one camera module disposed in an electronic device, wherein the camera module includes a lens housing which comprises, along an optical axis, an image stabilization unit, an auto-focusing drive unit, a lens system and an image sensor, wherein the image stabilization unit includes: an optical member configured to reflect incident light and to output the reflected image light to the image sensor; an optical member holder which has the optical member disposed therein and is disposed to be rotatable with reference to a pitching axis and a yawing axis; a pitching drive unit which is disposed in the lens housing to provide a force to allow the optical member holder to rotate with reference to the pitching axis; a yawing drive unit which is disposed in the lens housing to provide a force to allow the optical member holder to rotate with reference to the yawing axis; and a centering unit which is disposed between the lens housing and the optical member holder to provide a centering force of the optical member holder, wherein the centering unit includes: an asymmetric centering magnet which is disposed in the optical member holder and comprises a first surface facing a first direction and a second surface facing the opposite direction of the first direction, the second surface being formed in a curved shape; and a centering yoke which is disposed in the lens housing and disposed to face the second surface, spaced apart from the second surface, the centering yoke being parallel to the first surface.

According to an embodiment, the centering yoke may include: a center part which is spaced apart from the second surface by a first distance; and both end parts which are spaced apart from the second surface by a second distance which is smaller than the first distance, respectively, and are integrally formed with the center part.

According to an embodiment, the centering yoke may further include a shield yoke which is disposed in the lens housing and is disposed to face the second direction.

## Claims

1. An electronic device comprising at least one camera module, wherein the camera module comprises a lens housing which comprises, along an optical axis, an image stabilization unit, an auto-focusing drive unit, a lens system and an image sensor,
wherein the image stabilization unit comprises: an optical member configured to reflect incident light and to output the reflected image light to the image sensor; an optical member holder which has the optical member disposed therein and is disposed to be rotatable with reference to a pitching axis and a yawing axis; a pitching drive unit which is disposed in the lens housing to provide a force to allow the optical member holder to rotate with reference to the pitching axis; a yawing drive unit which is disposed in the lens housing to provide a force to allow the optical member holder to rotate with reference to the yawing axis; and a centering unit which is disposed between the lens housing and the optical member holder to provide a centering force of the optical member holder,
wherein the centering unit comprises: a centering magnet which is disposed in the optical member holder and comprises a first surface facing a first direction and a second surface facing the opposite direction of the first direction, the second surface being formed in a curved shape; and a centering yoke which is disposed in the lens housing and disposed to face the second surface, spaced apart from the second surface, the centering yoke being parallel to the first surface.

2. The electronic device of claim 1, wherein the centering magnet extends along the pitching axis.

3. The electronic device of claim 2, wherein the second surface has an asymmetrical shape and is convex in the second direction.

4. The electronic device of claim 3, wherein the centering magnet has a substantially semi-cylindrical shape.

5. The electronic device of claim 2, wherein the centering yoke extends along the pitching axis and is disposed to face the centering magnet.

6. The electronic device of claim 1, wherein the centering yoke comprises: a center part which is spaced apart from the second surface by a first distance; and both end parts which are spaced apart from the second surface by a second distance which is smaller than the first distance, respectively, and are integrally formed with the center part.

7. The electronic device of claim 1, wherein the centering yoke further comprises a shield yoke which is disposed in the lens housing and is disposed to face the second direction.

8. The electronic device of claim 7, wherein the shield yoke extends along the pitching axis and is disposed in parallel with the centering yoke.

9. The electronic device of claim 1, wherein the optical member holder further comprises a mass balancer, and
wherein the mass balancer is disposed at a point substantially opposite to a mass center of the optical member holder with reference to a rotation center of the optical member holder.

10. The electronic device of claim 9, wherein the mass balancer is made of a non-magnetic material and the mass balancers are disposed to be symmetric to each other with reference to the optical member holder.

11. The electronic device of claim 1, wherein the centering yoke has a plane plate shape and is disposed in parallel with the centering magnet to face the centering magnet.

12. The electronic device of claim 1, wherein the centering unit is disposed under the optical member holder, and is disposed to face the incident light of the camera module.

13. At least one camera module disposed in an electronic device, wherein the camera module comprises a lens housing which comprises, along an optical axis, an image stabilization unit, an auto-focusing drive unit, a lens system and an image sensor,
wherein the image stabilization unit comprises: an optical member configured to reflect incident light and to output the reflected image light to the image sensor; an optical member holder which has the optical member disposed therein and is disposed to be rotatable with reference to a pitching axis and a yawing axis; a pitching drive unit which is disposed in the lens housing to provide a force to allow the optical member holder to rotate with reference to the pitching axis; a yawing drive unit which is disposed in the lens housing to provide a force to allow the optical member holder to rotate with reference to the yawing axis; and a centering unit which is disposed between the lens housing and the optical member holder to provide a centering force of the optical member holder,
wherein the centering unit comprises: an asymmetric centering magnet which is disposed in the optical member holder and comprises a first surface facing a first direction and a second surface facing the opposite direction of the first direction, the second surface being formed in a curved shape; and a centering yoke which is disposed in the lens housing and disposed to face the second surface, spaced apart from the second surface, the centering yoke being parallel to the first surface.

14. The camera module of claim 13, wherein the centering yoke comprises: a center part which is spaced apart from the second surface by a first distance; and both end parts which are spaced apart from the second surface by a second distance which is smaller than the first distance, respectively, and are integrally formed with the center part.

15. The camera module of claim 13, wherein the centering yoke further comprises a shield yoke which is disposed in the lens housing and is disposed to face the second direction.
